# EUROPÄISCHE PATENTSCHRIFT

(11) **EP 0 493 473 B1**
(45) Veröffentlichungstag und Bekanntmachung des Hinweises auf die Patenterteilung: **22.06.1994**
(21) Anmeldenummer: 90914393.5
(22) Anmeldetag: 21.09.1990
(51) Int. Cl.: G06K 7/06

(54) **CHIPKARTENLESER**
CHIP CARD READER
LECTEUR DE CARTE A PUCE

(30) Priorität: 21.09.1989 DE 3931506
(43) Veröffentlichungstag der Anmeldung: 08.07.1992
(73) Patentinhaber: AMPHENOL-TUCHEL ELECTRONICS GmbH, D-74080 Heilbronn (DE)
(72) Erfinder: BLEIER, Robert, D-7101 Untergruppenbach (DE); REICHARDT, Manfred, D-7102 Weinsberg (DE)
(74) Vertreter: Wagner, Karl H., Dipl.-Ing.
(86) Internationale Anmeldenummer: EP9001608
(87) Internationale Veröffentlichungsnummer: WO9104547

(56) Entgegenhaltungen:
- EP-A- 0 214 478
- EP-A- 0 274 534
- EP-A- 0 316 699

## Beschreibung

Die Erfindung bezieht sich auf einen Chipkartenleser, insbesondere mit Lötkontakten und ganz allgemein auf einen Chipkartenleser, in den eine Chipkarte in eine Leseposition eingesetzt werden kann, in der im Chipkartenleser vorhandene Kontaktelemente, die auf der Chipkarte vorhandenen Kontaktzonen kontaktieren.

Bei bekannten Chipkartenlesern wird häufig während des Einsetzens der Chipkarte in die Leseposition eine Absenkbewegung zwischen Karte und Chipkartenleser vorgesehen, um so eine gute Kontaktierung zwischen den Kontaktelementen des Chipkartenlesers und den Kontaktzonen der Chipkarte vorzusehen. Solche Leser machen eine die Absenkbewegung vorsehende Mechanik erforderlich. Für andere Anwendungsfälle kann auch ein Chipkartenleser ausreichend sein, der auf eine solche Absenkbewegung verzichtet und gleitende Kontaktelemente verwendet, so daß beispielsweise eine Absenkmechanik für die Chipkarte entfallen kann.

Die vorliegende Erfindung bezweckt einen Chipkartenleser anzugeben, der ohne eine Absenkmechanik auskommt und auf der Chipkarte gleitende Kontakte verwendet.

Bei Chipkartenlesern dieser Art, die üblicherweise einen Kontaktträger aufweisen, dienen im Kontaktträger angeordnete Lesekontakte zur Kontaktierung der Kontaktzonen der Chipkarte, wenn diese sich in ihrer Lesestellung des Chipkartenlesers befindet, und ferner ist üblicherweise ein Endlagenschalter vorgesehen, der entweder geschlossen oder geöffnet wird, um dadurch das Erreichen der Lesestellung der Chipkarte zu melden.

Die vorliegende Erfindung nach Anspruch 1 sieht zum Erreichen eines kostengünstigen aber funktionsicheren Chipkartenlesers einen derart ausgebildeten und angeordneten Endlagenschalter im Kontaktträger vor, daß dieser in seinem die Leseposition der Chipkarte angebenden Betätigungszustand etwa senkrecht zur Chipkarteneinsteckrichtung wirkt, also keine entgegen der Karteneinsteckrichtung wirkende Kraftkomponente erzeugt. Gemäß einer bevorzugten Ausgestaltung der Erfindung besteht der Endlagenschalter aus zwei identischen Kontaktfedern (Schaltkontakten), die als Öffner oder Schließer angeordnet sein können. Die Kontaktkräfte wirken dabei senkrecht zur Steckrichtung auf die Chipkarte. Die daraus resultierende Reibkraft unterstützt die Haltekraft der Karte im Kartenschlitz des Chipkartenlesers.

Gemäß einer weiteren Ausgestaltung der Erfindung sind die Schaltkontakte des Endlagenschalters und auch die Lesekontakte in der Form von Kontaktfedern ausgebildet und unter Vorspannung in den Kontaktträger eingerastet. Die Kontaktfedern können mit Einlötstiften oder SMT-Lötfahnen gefertigt werden. Durch die Vorspannung wird erreicht, daß die Kontaktkraft auch bei geringem Federweg zur Verfügung steht. Es ergibt sich ein minimaler Verschleiß der an den Lese- und Schaltkontakten ausgebildeten Kuppen. Durch die flache Federkennlinie der vorgespannten Kontakte ergibt sich ein geringerer Einfluß der Karten- und Schlitztoleranz auf die Kontaktkraft.

Gemäß einer weiteren und bevorzugten Ausgestaltung der Erfindung ist im Kartenschlitz ein auf eine Kartenkante wirkender federnder Arm vorgesehen. Vorzugsweise ist dieser federnde Arm für eine erhöhte dynamische Belastung am Kontaktträger angespritzt.

Die erfindungsgemäßen Lesekontakte werden durch geeignete elastische Rastmittel im Kontaktträger gehalten. Vorzugsweise sind an den Schaltkontakten Haltelappen ausgebildet, die eine Verschiebung der Kontakte in Richtung der Längsersteckung der Kontakte verhindern. Ferner sind am Kontaktträger Mittel vorgesehen, die beim Einsetzen der Lesekontakte eine Vorspannung bewirken. Auch für die Schaltkontakte sind am Kontakträger Mittel zur Vorspannung der Schaltkontakte vorgesehen. Geeignete Rastmittel am Kontaktträger arbeiten mit korrespondierenden Rastmitteln an den Schaltkontakten zusammen, um diese im Kontaktträger festzulegen.

Bevorzugte Ausgestaltungen der Erfindung ergeben sich aus den abhängigen Ansprüchen.

Weitere Vorteile, Ziele und Einzelheiten der Erfindung ergeben sich aus der Beschreibung von Ausführungsbeispielen anhand der Zeichnung; in der Zeichnung zeigt:
- Fig. 1: eine Vorderansicht eines gemäß der Erfindung ausgebildeten Chipkartenlesers, angeordnet auf einer Leiterplatte;
- Fig. 2: eine Ansicht der Unterseite des Chipkartenlesers (bei abgenommener Leiterplatte) der Fig. 1;
- Fig. 3: eine Seitenansicht des Chipkartenlesers der Fig. 1;
- Fig. 4: eine Ansicht der Oberseite des Chipkartenlesers der Fig. 1 bei abgenommenem Deckel;
- Fig. 5: in perspektivischer Darstellung einen Lesekontakt in seinem nicht in den Kontaktträger eingesetzten Zustand;
- Fig. 6: perspektivisch einen Schaltkontakt des Endlagenschalters in seinem nicht in den Kontaktträger eingesetzten Zustand;
- Fig. 7: schematisch einen Schnitt längs Linie A-B in Fig. 4, wobei hier die Chipkarte ihre Leseposition noch nicht erreicht hat;
- Fig. 8: den gleichen Schnitt wie in Fig. 7, wobei aber hier die Chipkarte ihre Leseposition erreicht hat;
- Fig. 9: einen Schnitt längs Linie E-F in Fig. 4 zur Darstellung eines Schaltkontakts;
- Fig.10: einen Schnitt G-H in Fig. 4 zur Darstellung der beiden Schaltkontakte;
- Fig.11, 12 und 13: schematisch die Anordnung der Schaltkontakte und deren Betätigung durch die Chipkarte, wobei Fig. 13 die Ansicht aus Richtung X in Fig. 11 und 12 ist;
- Fig.14: einen Ausschnitt der Darstellung der Unterseite des Kontaktträgers gemäß Fig. 2;
- Fig.15: einen Schnitt längs Linie 15-15 in Fig. 14;
- Fig.16: einen Schnitt längs Linie 16-16 in Fig. 14.

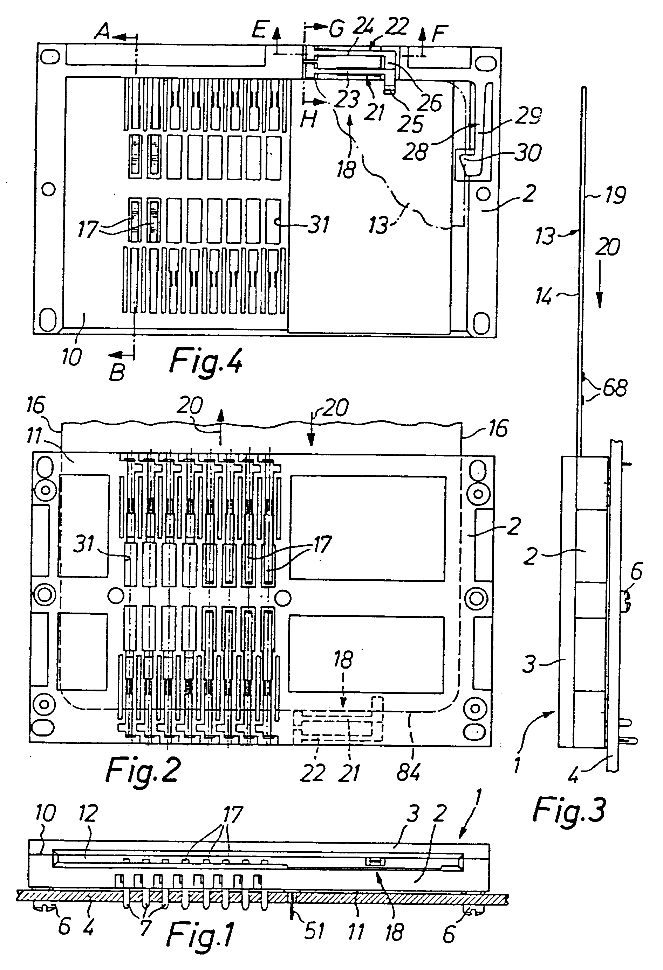

Zunächst sei unter Bezugnahme auf die Fig. 1 bis 4 der erfindungsgemäße Chipkartenleser 1 erläutert. Erfindungsgemäß besteht der Chipkartenleser 1 aus einem Kontaktträger 2, der zusammen mit einem Deckel 3 eine Kartenführung für eine Chipkarte 13 bildet, die in den Chipkartenleser 1 in eine Leseposition eingeschoben werden kann. Vorzugsweise sind Kontaktträger 2 und Deckel 3 durch Preßpassungen miteinander verbunden.

Der erfindungsgemäße Chipkartenleser 1 kann vorzugsweise bei entsprechender Ausbildung seiner Kontaktelemente direkt auf eine Leiterplatte 4 aufgesetzt und daran durch Befestigungsmittel 6 befestigt werden. Wie in Fig. 1 gezeigt, sind die noch näher zu erläuternden Kontaktelemente des Kontaktträgers 2 mit Einlötstiften 7 versehen, die in entsprechende Öffnungen der Leiterplatte 4 passen. Obwohl der erfindungsgemäße Chipkartenleser vorzugsweise zusammen mit einer Leiterplatte 4 verwendet wird, so kann er doch ohne weiteres auch in anderer Weise mit einer externen Schaltung verbunden sein.

Der Kontaktträger 2 besitzt eine in Fig. 4 gezeigte Oberseite 10 und eine in Fig. 2 gezeigte Unterseite 11. Wenn der Deckel 3, benachbart zur Oberseite 10, befestigt ist, so wird die bereits erwähnte Kartenfünrung gebildet, und ebenfalls ein Einsteckschlitz 12 (Fig. 1), durch den die Chipkarte 13 in ihrer Einsteckrichtung 20 eingeschoben werden kann.

Im Kontaktträger 2 sind mehrere Kontaktelemente untergebracht. und zwar im wesentlichen die folgenden: Kartenkontakte 17 und einen Endlagenschalter 18 bildende Schaltkontakte 21 und 22. Der Schaltkontakt 21 kann als vorderer Schaltkontakt bezeichnet werden und besitzt einen Arm 23, der an seinem freien Ende eine vordere Zunge 25 bildet. Der als hinterer Schaltkontakt bezeichnete Schaltkontakt 22 besitzt einen Arm 24, der eine sogenannte hintere Zunge 26 bildet.

Speziell in Fig. 4 erkennt man ferner eine Toleranzausgleichsvorrichtung 28, die für eine erhöhte dynamische Belastung einen angespritzten federnden Arm 29 aufweist, der mit einer Nase 30 auf eine Seitenkante der Chipkarte 13 einwirken kann.

Fig. 2 zeigt noch, daß die Kartenkontakte 17 jeweils in Kontaktkammern 31 angeordnet sind, welche in dem aus Kunststoff bestehenden Kontaktträger 2 bei dessen Herstellung, beispielsweise durch ein Spritzgießverfahren ausgebildet werden.

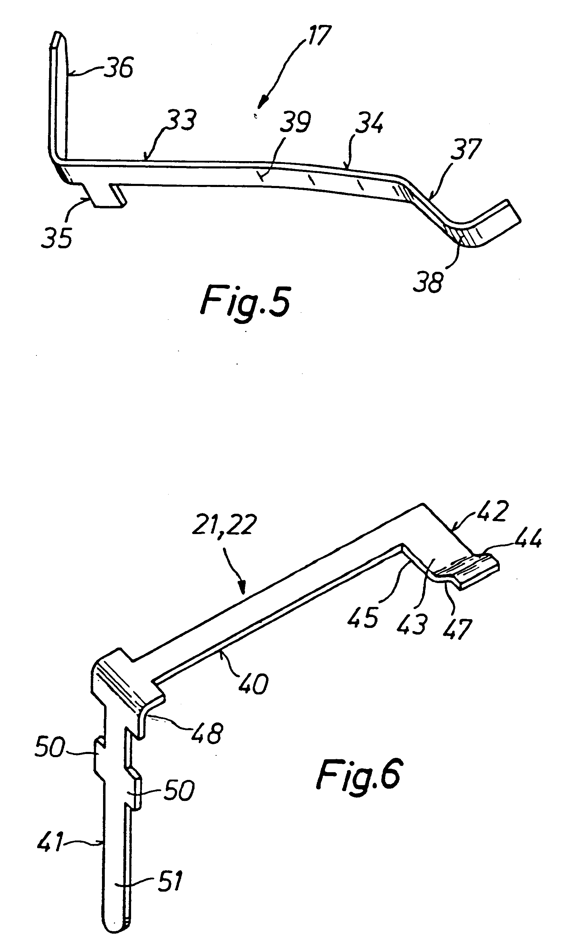

Fig. 5 zeigt einen Kartenkontakt 17 in seinem Zustand vor Einbau in eine Kontaktkammer 31. Der Kartenkontakt 17 ist vorzugsweise, wie gezeigt, eine Kontaktfeder mit einem ersten ebenen Teil 33, einem zweiten ebenen Teil 34, einer davon wegragenden Haltezunge (Lappen) 35, einem Anschlußteil 36 (welches in Form eines Einlötstifts 7 gemäß Fig. 1 vorgesehen sein kann) und eines Kontaktkuppenteils 37 mit einer Kontaktkuppe 38. Die beiden ebenen Teile 33 und 34 sind längs einer Biegelinie 39 geringfügig abgewinkelt.

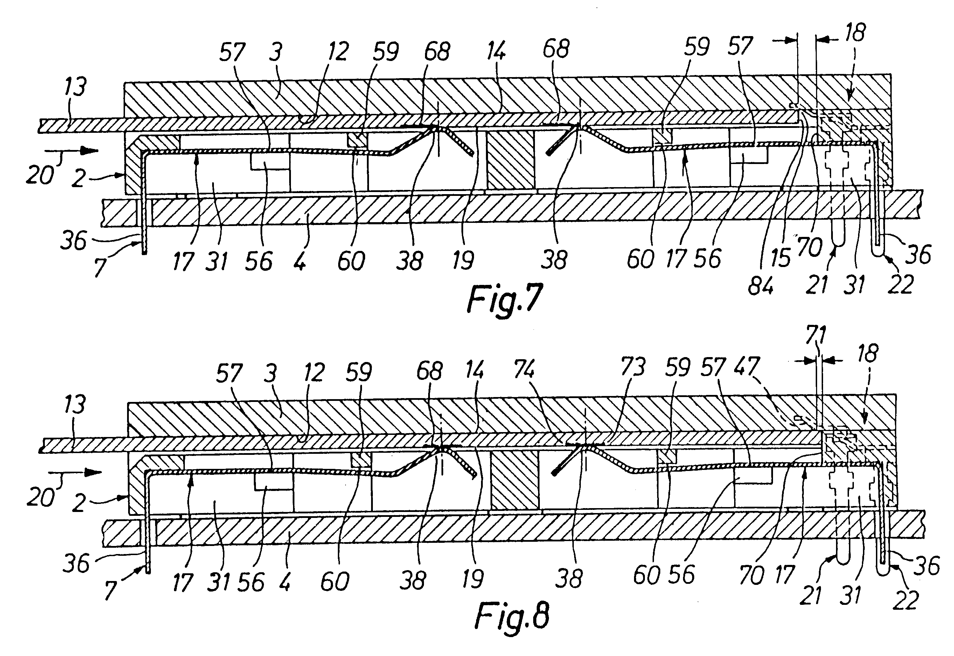

Fig. 6 zeigt in perspektivischer Darstellung die identischen Schaltkontakte 21, 22 in der Form einer Kontaktfeder, bestehend aus einem ersten ebenen Teil 40, einem zweiten ebenen Teil 41, einem abgewinkelten Teil 42, einem ebenen Abschnitt 43 sowie einem geneigten Abschnitt 44. Der geneigte Abschnitt 44 bildet an seiner Unterseite eine Karteneingriffsfläche 47. Zwischen dem ersten ebenen Teil 42 und dem zweiten ebenen Teil 41 verläuft ein Abwinkelteil 48. Der zweite ebene Teil 41 bildet zwei gegenüberliegende Ansätze 50 sowie einen Anschlußteil 51.

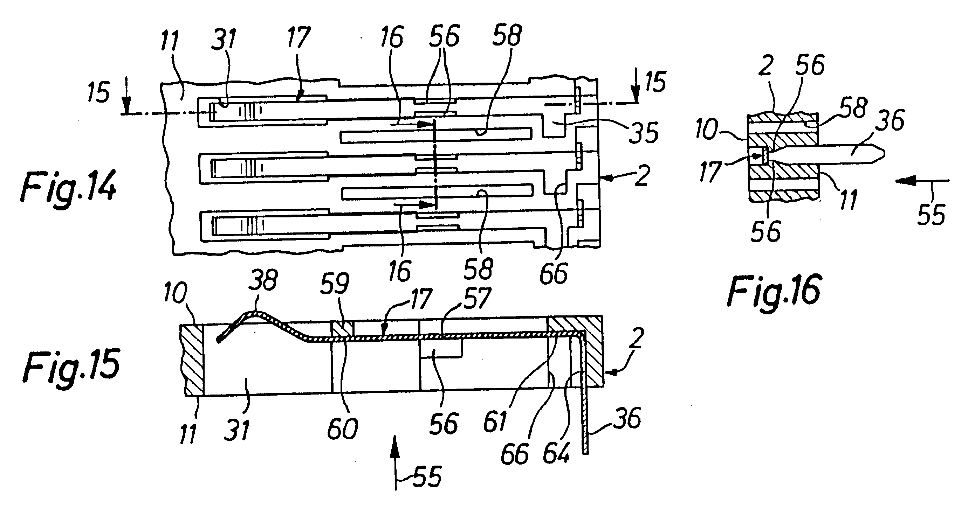

Insbesondere unter Bezugnahme auf die Fig. 7 und 8 sowie die Fig. 14 bis 16 sei nunmehr auf die Befestigung der Lesekontakte 17 eingegangen. Die Lesekontakte 17 werden von der Unterseite 11 her in die Kontaktkammern 31 eingesetzt. Vorzugsweise sind dabei die Kontakte 17 noch an ihrem sie verbindenden Stanzstreifen befestigt. Zwischen den Kontaktkammern 31 sind - wie in Fig. 14 und 16 gezeigt - Einsparungen 58 über eine gewisse Länge hinweg vorgesehen, und zwar insbesondere im Bereich von in die Kammern hinein ragenden Raststegen 56 und von denen immer zwei gegenüberliegend unter Bildung eines Spaltes jeder Kammer 31 angeordnet sind. Die Raststege 56 sind einstückig mit dem Kontaktträger 2 aus Kunststoff hergestellt und die Einsparungen 58 erhöhen die elastisch federnde Ausweichbewegung für die Raststege 56, wenn ein Lesekontakt 17 mit seinen in Fig. 14 veranschaulichten Breite in Richtung 55 eingedrückt wird. Beim Eindrücken weichen also die Raststege 56 elastisch federnd zurück und kehren dann in ihre in Fig. 14 gezeigte Ursprungsposition wieder zurück und halten dann diesen Kontakt 17 in der in Fig. 15 gezeigten Weise. Das heißt, dieser Kontakt 17 liegt federnd auf einer Anlagefläche 57 der Raststege 56 auf und nimmt eine insgesamt gegenüber Fig. 5 nunmehr geradlinige vorgespannte Lage ein, und zwar unter Zuhilfenahme der Anlagefläche 60, gebildet von einem Steg 59 und der Anlagefläche 61, gebildet von einem Winkelteil 62 das Kontaktträgers. Ferner liegt der Anschlußteil 36 an einer Anlagefläche 64 des Winkelteils 62 vorzugsweise an.

Eine Verschiebung des Kontaktelements 17 in Längsrichtung des Kontaktelements, also in Fig. 14 und 15 nach links, wird durch die Haltezunge 35 verhindern, welche in einer entsprechenden Ausnehmung 66 des Kontaktträgers sitzt.

Die höhenmäßige Anordnung der in Fig. 15 gezeigten Anlageflächen 60, 57 und 61 ist derart getroffen, daß der Lesekontakt 17 in der gezeigten Position vorgespannt ist.

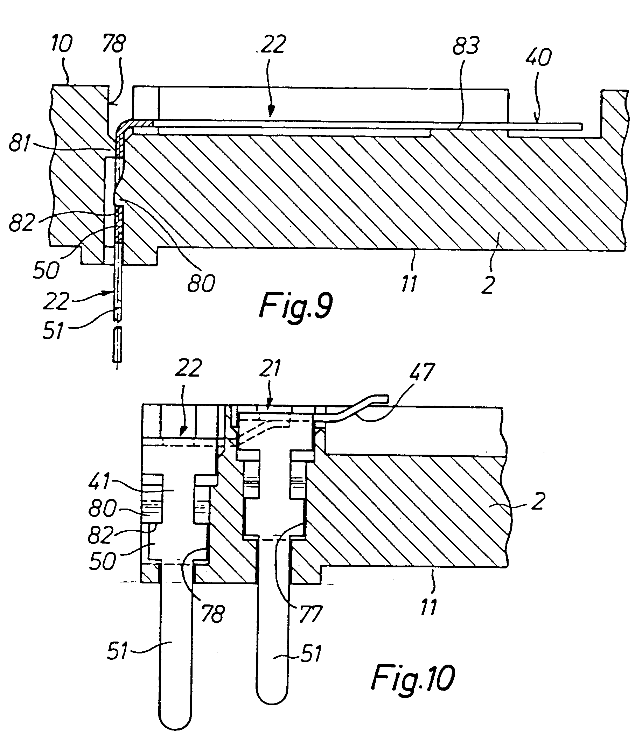

Im folgenden sei im einzelnen der bereits in den Fig. 2 und 4 dargestellte Endlagenschalter 18 unter zusätzlicher Bezugnahme auf die Fig. 6 bis 13 erläutert. Speziell in den Fig. 9 und 10 erkennt man, daß die beiden Schaltkontakte 21, 22 von der Oberseite 10 her in Aufnahmeschlitze 77, 78 eingesetzt sind, in die jeweils Nasen 80, 81 ragen, um die Kontakte 21, 22 zu haltern. Die Raststege 56 kommen im eingerasteten Zustand an einer Anlagefläche 82 zur Anlage. Der insbesondere in Fig. 9 gezeigte hintere Schaltkontakt 22 liegt mit einem Abschnitt seines ebenen Teils 40 auf einer Anlagefläche 83 des Kontaktträgers 2 auf, um so eine definierte Position einzunehmen. Es sei noch bemerkt, daß sowohl der Schaltkontakt 22 wie auch der Schaltkontakt 21 im Ruhezustand gemäß Fig. 6 so ausgebildet sind, daß zwischen den beiden ebenen Teilen 41, 42 ein Winkel gebildet wird, der etwas kleiner ist als 90°. Da die Anlagefläche 83 und die durch den Schlitz 78 gebildeten Anlageflächen für den Schaltkontakt genau um 90° versetzt liegen, ergibt sich die für den Kontakt 22 (und auch 21) erwünschte Vorspannung beim Einsetzen des Kontakts 21 und 22 in den Kontaktträger 2.

Während also der hintere Kontakt auf der Anlagefläche 82 vorgespannt aufliegt, ist der vordere Kontakt 21 etwas höher (vergleiche Fig. 10) und eben nach vorne gegenüber dem hinteren Kontakt versetzt angeordnet und ist zum hinteren Kontakt 22 derart vorgespannt, daß im nicht betätigten Zustand des Endlagenschalters 18 der abgewinkelte Teil 42 des vorderen Kontakts 21 mit der Unterseite an die Oberseite des abgewinkelten Teils 42 des hinteren Kontakts 22 anliegt.

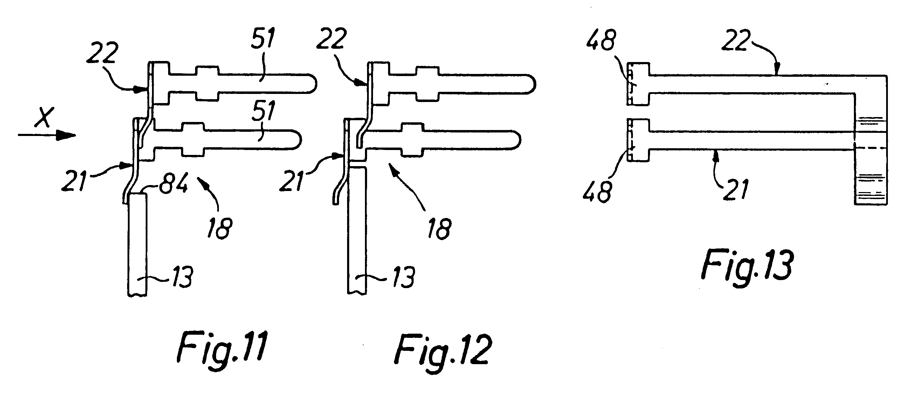

Wie man in den Fig. 7 und 8 sowie 11 bis 13 erkennt, ist dabei der vordere Kontakt 21 mit seinem abgewinkelten Teil 42 derart angeordnet, daß er beim Einschieben der Chipkarte in den Chipkartenleser 1 vom unteren und hinteren Kontakt 22 abgehoben werden kann. Das Abheben erfolgt vorzugsweise durch die hintere obere Kante 15 der Karte 13. Diese kommt mit der Karteneingriffsfläche 47 des vorderen Schaltkontakts 21 in Berührung, und zwar insbesondere in dem Augenblick, wo der Beginn der ersten Kontaktzonen 68 in dem Bereich der Kuppen 38 der Lesekontakte 17 kommen. Bei fortgesetzter Bewegung der Karte hebt die Vorderkante 15 den vorderen Kontakt 21 an, bis (vgl. Fig. 8) bei Erreichen von etwa der Mitte der Kontaktzonen 68 durch die Kuppen 38 der Lesekontakte 17 die obere, hintere Kante 15 und ein Teil der Oberseite 14 der Karte 13 unter der Unterseite 45 des ebenen Abschnitts 43 zu liegen kommen, so daß der vordere Kontakt senkrecht zur Einsteckrichtung 20 auf die Karte 13 drückt und bestrebt ist, diese in ihrer in Fig. 8 gezeigten Leseposition zu halten. Der Endlagenschaltser 18 ist dann, wie deutlich in Fig. 12 gezeigt, offen und zeigt diesen Zustand durch seine Öffnung an.

Gegebenenfalls kann zusätzlich zu den beschriebenen Maßnahmen noch die bereits erwähnte Toleranzausgleichsvorrichtung 28 vorgesehen sein, die auch als Bremse wirken kann. Die Toleranzausgleichsvorrichtung 28 kommt mit einer Seitenkante 16 beim Einschieben der Karte 13 in deren Leseposition gemäß Fig. 8 in Eingriff. Die Nase 30 übt dabei eine gewisse Kraft quer zur Einsteckrichtung 20 auf die Karte 13 aus.

Zusammenfassend wird der erfindungsgemäße Chipkartenleser 1 zusammen mit einer Chipkarte 13 wie folgt verwendet. Die Chipkarte wird mit ihrer hinteren Seite 84 voraus (vgl. Fig. 2 und 7) in den in Fig. 1 gezeigten Einsteckschlitz 2 eingeschoben. Als erstes kommen die an der Unterseite 19 der Chipkarte 13 vorgesehenen Kontaktzonen 68 (vgl. 7) mit den Kontaktkuppen 38 der Lesekontakte 17 in Berührung. Gleichzeitig trifft die hintere obere Kante 15, gebildet an der hinteren Seite 84 der Karte 13 (vgl. Fig. 7) auf die Kartenangriffsfläche 47 und öffnet den oben beschriebenen Endlagenschalter 18, sobald der in Fig. 8 mit 71 bezeichnete Abstand durchlaufen ist und nachdem die hintere Seite 84 an dem Anschlag 70, gebildet durch den Kontaktträger 2, zum Anschlag kommt und so die Leseposition erreicht hat. In der Leseposition bilden sich die Kontaktkuppen 38 in etwa in der Mitte der Kontaktzonen 68, die einen Anfang 73 und ein Ende 74 aufweisen. In der Leseposition wird die Karte 13 zum einen durch die Kraft der vorgespannten Lesefedern 17 erhalten und zum anderen durch den vorderen oberen Schaltkonakt 21, der auf die Oberseite 14 der Karte 13 drückt. Eine diesbezügliche Haltekraft kann ferner durch die Toleranzausgleichvorrichtung 28 vorgesehen werden.

## Patentansprüche

1. Chipkartenleser mit einem Kontaktträger (2), in dem Lesekontaktfedern (38) und einen Endlagenschalter (18) bildende Schaltkontaktfedern (21, 22) angeordnet sind, wobei die Lesekontaktfedern zur Kontaktierung der Kontaktzonen einer in den Chipkartenleser in eine Lesestellung eingesetzten Chipkarte dienen, wobei die Chipkarte in die Lesestellung von Hand durch eine in eine Einschubrichtung erfolgende Einschubbewegung eingesetzt wird, und wobei der Endlagenschalter in betätigtem oder nicht betätigtem Zustand sein kann, wobei der Endlagenschalter derart angeordnet ist, daß er am Ende der Einschubbewegung durch die Karte betätigt wird,
dadurch **gekennzeichnet**,
daß der Endlagenschalter (18) derart ausgebildet ist, daß er in seinem betätigten Zustand in der Lesestellung der Karte eine Kraft auf diese ausübt, die in etwa senkrecht zur Kartensteckrichtung wirkt, also in der Lesestellung keine Kraftkomponente erzeugt, die entgegen der Karteneinsteckrichtung (20) wirken würde.

2. Chipkartenleser nach Anspruch 1, dadurch gekennzeichnet, daß die Lesekontaktfedern derart vorgespannt sind, daß die Berührung mit den Kontaktzonen (68) der Chipkarte mit minimalem Hub erfolgt, und daß die Schaltkontaktfedern (21, 22) in ihrem eingebauten Zustand vorgespannt sind.

3. Chipkartenleser, nach einem der vorhergehenden Ansprüche, dadurch gekennzeichnet, daß ein Deckel (3) vorgesehen ist, der zusammen mit dem Kontakträger (2) eine Kartenführung sowie den Einsteckschlitz (12) bildet, und daß vorzugsweise Dackel und Kontaktträger durch Preßpassungen miteinandear verbunden sind.

4. Chipkartenleser nach einem oder mehreren der vorhergehenden Ansprüche, dadurch gekennzeichnet, daß zum Eingriff mit einer Seitenkante (16) der Chipkarte (13) eine Toleranzausgleichsvorrichtung (28) vorgesehen ist.

5. Chipkartenleser nach einem oder mehreren der vorhergehenden Ansprüche, dadurch gekennzeichnet, daß der Endlagenschalter (18) folgendes aufweist:
zwei gleichartige Bauteile (21, 22), die in Steckrichtung (20) der Chipkarte derart hintereinander angeordnet, daß der mit den Schaltkontakten verbundene Stromkreis erst dann geschaltet wird, wenn der vordere der hintereinander liegenden Kontaktzonen oder -stellen (68) auf der Chipkarte bereits an dem Kontakt für den hinteren Kontaktpunkt vorbei ist, um so Kurzschlüsse im Chip zu vermeiden.

6. Chipkartenleser nach einem oder mehreren der vorhergehenden Ansprüche, dadurch gekennzeichnet, daß der Endlagenschalter zwei Kontaktfedern (21, 22) aufweist, die von der Oberseite (10) des Kontaktträgers her in Aufnahmeschlitze (78, 79) eingesetzt und durch Rastmittel (80, 81) im eingesetzten Zustand gehalten sind.

7. Chipkartenleser nach einem oder mehreren der vorhergehenden Ansprüche, dadurch gekennzeichnet, daß die Kontaktfedern (21, 22) des Endlagenschalters vorgespannt sind.

8. Chipkartenleser nach einem oder mehreren der vorhergehenden Ansprüche, dadurch gekennzeichnet, daß der eine Schaltkontakt (22) beim Einsetzen in den Kontaktträger (2) gegen eine Anlagefläche (83) am Kontaktträger vorgespannt wird, und zwar vorzugsweise dadurch, daß der in seinem nicht eingesetzten Zustand weniger als 90° abgewinkelte Schaltkonktakt nach dem Einsetzen in dem Kontaktträger (2) um 90° abgewinkelt ist.

9. Chipkartenleser nach einem oder mehreren der vorhergehenden Ansprüche, dadurch gekennzeichnet, daß ein vorderer Schaltkontakt (21) gegen einen hinteren Schaltkontakt (22) hin senkrecht zur Karteneinschubrichtung vorgespannt ist.

10. Chipkartenleser nach einem oder mehreren der vorhergehenden Ansprüche, dadurch gekennzeichnet, daß die Schaltkontakte (21, 22) zum Verrasten dienende Ansätze (50) aufweisen.

11. Chipkartenleser nach Anspruch 9, dadurch gekennzeichnet, daß zumindest der vordere Schaltkonakt (21) eine abgeschrägte Karteneingriffsfläche (47) aufweist, die vorzugsweise mit der oberen, hinteren Kante (15) einer Chipkarte in Eingriff kommt, wodurch der Endlagenschalter (18) geöffnet wird und wobei der Schaltkontakt (21) derart ausgebildet ist, daß er bei Erreichen der Leseposition mit einem ebenen Abschnitt (43) auf der Oberseite der Karte aufliegt.

12. Chipkartenleser nach einem oder mehreren der vorhergehenden Ansprüche, dadurch gekennzeichnet, daß die Schaltkontakte einen verhältnismäßig langen durch einen ebenen Teil (40) gebildeten Arm aufweisen, von dem aus ein abgewinkelter Teil (42) wegragt, der zum einen ebenen Abschnitt (42) und einen geneigten Abschnitt (44) bildet.

13. Chipkartenleser nach einem oder mehreren der vorhergehenden Ansprüche, dadurch gekennzeichnet, daß die als Kontaktfedern ausgebildeten Lesekontakte (17) von der Unterseite (11) des Kontaktträgers her in Kontaktkammern eingesetzt und derart eingerastet werden, daß sie im eingesetzten Zustand vorgespannt sind.

14. Chipkartenleser nach einem oder mehreren der vorhergehenden Ansprüche, dadurch gekennzeichnet, daß Rastmittel in der Form von Raststegen (56) vom Kontaktträger (2) gebildet werden, die beim Eindrücken eines Lesekontakts elastisch nachgeben und das Einsetzen ermöglichen, um sodann zurückzuschnappen und den Lesekontakt (17) in seiner Leseposition zu halten.

15. Chipkartenleser nach einem oder mehreren der vorhergehenden Ansprüche, dadurch gekennzeichnet, daß Freisparungen (58) vorgesehen sind, um die Elastizität der Raststege (56) zu erreichen.

16. Chipkartenleser nach einem oder mehreren der vorhergehenden Ansprüche, dadurch gekennzeichnet, daß der Anschlußteil (36) der Lesekontakte (17) abgewinkelt ist und daß benachbart zur Abwinkelung Haltezungen (35) gebildet sind, welche entsprechende Ausnehmungen des Kontaktträgers (2) eingreifen, um eine Verschiebung des Lesekontakts in Richtung seiner Längserstreckung zu verhindern.

17. Chipkartenleser nach einem oder mehreren der vorhergehenden Ansprüche, dadurch gekennzeichnet, daß der Lesekontakt durch seine Lage zwischen den Auflageflächen (60, 57 und 61) vorgespannt ist.

18. Chipkartenleser nach einem oder mehreren der vorhergehenden Ansprüche, dadurch gekennzeichnet, daß der Lesekontakt (17) einen ersten ebenen Teil (33) und einen zweiten ebenen Teil (34) aufweist, die um einen Winkel etwas kleiner als 180° abgewinkelt sind derart, daß bei in die Kontaktkammer (31) eingesetztem Lesekontakt (vgl. Fig. 15) die beiden ebenen Teile (33, 34) im wesentlichen auf einer Geraden liegen.

19. Chipkartenleser nach einem oder mehreren der vorhergehenden Ansprüche, dadurch gekennzeichnet, daß die Toleranzausgleichsvorrichtung (28) einen sich in Kartensteckrichtung (29) erstreckenden Arm mit einer quer dazu verlaufenden Nase (30) einstückig ausgebildet mit dem Kontaktträger (2) aufweist.

## Claims

1. A chipcard reader comprising a contact support (2) within which reading contacts (38) and switching contacts (21, 22) forming an end position switch (18) are located, wherein the reading contacts are addapted for engagement with contact zones of a chipcard inserted into said chipcard reader and located in a reading position therein, wherein said chip card is manually inserted into the reading position by an insert movement in the direction of insertion, and wherein said end position switch can be in an actuated and not actuated position, wherein the end position switch is arranged such that it is actuated by the card at the end of tis insert movement,
characterized in that the end position switch (18) is designed such that it applies in its actuated position a force approximately perpenticular with respect to the direction of card insertion such that no force component is generated which would act in the direction opposite to the direction (20) of card insertion.

2. The chipcard reader according to claim 1,
characterized in that the reading contacts are biased such that the engagement with the contact zones (68) of the chipcard occurs with a minimum amount of movement, and that the switching contacts (21, 22) are biased when located in the installed condition.

3. The chipcard reader according to one of the preceding claims characterized in that a cover (3) is provided which forms together with the contact support (2) a card guide means as well as an insertion slot (12), and that preferably the cover an the contact support are connected to each other by press fit means.

4. The chipard reader according to one or more of the preceding claims characterized in that for the engagement with a side edge (16) a tolerance equalisation means (28) is provided.

5. The chipcard reader as set forth in one or more of the preceding claims characterized in that the end position switch (18) comprises:
two similar components ( 21, 22) which are arranged in the direction (20) of insertion of the chipcard behind each other such, that the current circuit connected to the switching contacts is switched only if the forwardly located contact zone of the contact zones (68) located behind each other on the chipcard has already passed the contact for the backward contact zone, so as to avoid short circuits in the chip.

6. The chipcard reader of one or more of the preceding claims characterized in that the end position switch comprises two contact springs (21, 22) which are inserted from the upper side (10) of the contact support into receiving slots (78, 79), and wherein said contact springs are held in the installed condition by means of detent means (80, 81).

7. The chipcard reader of one or more of the preceding claims characterized in that the contact springs (21, 22) of the end position switch are biased.

8. The chipcard reader of one or more of the preceding claims characterized in that the one switching contact (22) is biased against an abutment surface (83) at the contact support, when being inserted into the contact support (2) preferably due to the fact that the switching contact which is angled by less than 90° in its not inserted condition is angled by about 90° after being inserted into the contact support (2).

9. The chipcard reader of one or more of the preceding claims characterized in that a forward switching contact (21) is biased toward a backward switching contact (22) perpendicular with respect to the direction in which the card is inserted.

10. The chipcard reader of one or more of the preceding claims characterized in that the switching contacts (21, 22) are provided with projections (50) which serve for the locking or detent operation.

11. The chipcard reader of claim 9 characterized in that at least the forward switching contact (21) comprises an inclined card engagement surface (47) which preferably comes into engagement with the upper backward edge (15) of a chipcard, whereby the end position switch (18) is opened and wherein the switching contact (21) is designed such that the switching contact (21) is in engagement with the upper surface of the card with a flat section (43) when the reading position is reached.

12. The chipcard reader of one or more of the preceding claims characterized in that the switching contacts have a relatively long arm formed by a flat portion (40) from which an angled portion (42) projects away which forms a flat section (42) and an inclined section (44).

13. A chipcard reader of one or more of the preceding claims characterized in that the reading contacts (17) are designed as contact springs and are adapted to be inserted into contact chambers from the bottom side (11) of the contact support such, that they are locked by detent means, and that the reading contacts are biased in the installed condition.

14. The chipcard reader of one or more of the preceding claims characterized in that the detent means are formed in the form of detent webs (56) by the contact support (2) said detent webs (56) being adapted to resiliently recede when the reading contact is pressed inwardly so as to allow for the insertion or installment of the reading contact, whereupon said detent webs move snapingly back so as to hold the reading contact (17) in its reading position.

15. The chipcard reader of one or more of the preceding claims characterized in that recesses (58) are provided so as to obtain the necessary elasticity for the detent webs (56).

16. The chipcard reader of one or more of the preceding claims characterized in that the termination portion (36) of the reading contact (17) is angled and that adjacent to that angled portion holding tongues (35) are formed which come into engagement with respective recesses of the contact support (2), so as to avoid a movement of the reading contacts in a direction along the longitudinal extension of the reading contact.

17. The chipcard reader as set forth in one or more of the preceding claims characterized in that the reading contact is biased due to its position between the abutment surfaces (60, 57 and 61).

18. The chipcard reader of one or more of the preceding claims characterized in that the reading contact (17) comprises a first flat portion (33) and a second flat portion (34) which are angled with respect to each other by an angle of less than 180° such, that then, when a reading contact (see Fig. 15) is inserted into a contact chamber (31) the two flat portion (33, 34) are substantually located on a straight line.

19. The chipcard reader of one or more of the preceding claims characterized in that the tolerance equalisation means (28) comprises an arm extending in the direction (29) of the insertion of the card and comprises a nose which extends transversally to the arm and is formed as a single piece together with the arm and with the contact support (2).

## Revendications

1. Lecteur de cartes à puce, comprenant un porte-contacts (2) dans lequel sont disposés des ressorts de contact de lecture (38) et des ressorts de contact de commutation (21, 22) constituant un interrupteur de fin de course (18), les ressorts de contact de lecture servant à établir le contact avec des zones de contact d'une carte à puce insérée à une position de lecture dans le lecteur, la carte étant introduite manuellement jusqu'à la position de lecture par un mouvement d'insertion s'effectuant dans une direction d'insertion, l'interrupteur de fin de course pouvant être à l'état actionné ou à l'état non actionné, l'interrupteur de fin de course étant agencé de manière qu'il soit actionné par la carte à la fin du mouvement d'insertion, caractérisé en ce que l'interrupteur de fin de course (18) est réalisé de manière qu'à son état actionné, lorsque la carte occupe sa position de lecture, il exerce sur la carte une force agissant à peu près perpendiculairement à la direction d'insertion de la carte, de sorte quà la position de lecture, il ne génère pas de composante de force qui agirait en sens contraire à la direction d'insertion de la carte (20).

2. Lecteur de cartes à puce selon la revendication 1, caractérisé en ce que les ressorts de contact de lecture sont précontraints de manière que l'établissement du contact avec les zones de contact (68) de la carte à puce s'effectue sous une course minimale, et que les ressorts de contact de commutation (21, 22) sont précontraints à leur état monté.

3. Lecteur de cartes à puce selon une des revendications précédentes, caractérisé en ce qu'un couvercle (3) est prévu, qui forme ensemble avec le porte-contacts (2) un guide-carte ainsi que la fente d'insertion (12), et que le couvercle et le porte-contacts sont de préférence assemblés entre eux par des ajustements serrés.

4. Lecteur de cartes à puce selon une ou plusieurs des revendications précédentes, caractérisé en ce qu'il comprend un dispositif compensateur de tolérances (28) destiné à agir sur un bord latéral (16) de la carte à puce (13).

5. Lecteur de cartes à puce selon une ou plusieurs des revendications précédentes, caractérisé en ce que l'interrupteur de fin de course (18) comporte deux pièces identiques (21, 22) formant des contacts de commutation et placées l'une derrière l'autre dans la direction d'insertion (20) de la carte à puce, de manière que le circuit électrique raccordé aux contacts de commutation soit seulement fermé ou ouvert lorsque la zone ou le point de contact situé à l'avant des zones ou points de contact (68), placés l'un derrière l'autre sur la carte à puce, a déjà dépassé le contact pour le point de contact arrière, afin d'éviter ainsi des court-circuits dans la puce.

6. Lecteur de cartes à puce selon une ou plusieurs des revendications précédentes, caractérisé en ce que l'interrupteur de fin de course comporte deux ressorts de contact (21, 22) qui sont mis en place à partir de la face supérieure (10) du porte-contacts dans des fentes réceptrices (78, 79) et sont maintenus à l'état monté par des moyens d'arrêt (80, 81).

7. Lecteur de cartes à puce selon une ou plusieurs des revendications précédentes, caractérisé en ce que les ressorts de contact (21, 22) de l'interrupteur de fin de course sont précontraints.

8. Lecteur de cartes à puce selon une ou plusieurs des revendications précédentes, caractérisé en ce que l'un (22) des contacts de commutation, lors de sa mise en place dans le porte-contacts (2), est précontraint par son application contre une face d'appui (83) prévue sur le porte-contact, de préférence du fait qu'il possède une partie coudée qui forme à l'état non monté un angle inférieur à 90° et qui, après la mise en place dans le porte-contact (2), forme un angle de 90°.

9. Lecteur de cartes à puce selon une ou plusieurs des revendications précédentes, caractérisé en ce qu'un contact de commutation avant (21) est précontraint vers un contact de commutation arrière (22) suivant une direction perpendiculaire à la direction d'insertion de la carte.

10. Lecteur de cartes à puce selon une ou plusieurs des revendications précédentes, caractérisé en ce que les contacts de commutation (21, 22) comportent des talons (50) pour la retenue.

11. Lecteur de cartes à puce selon la revendication 9, caractérisé en ce qu'au moins le contact de commutation avant (21) présente une face d'attaque inclinée (47) pour la carte, contre laquelle vient s'appliquer de préférence l'arête supérieure (15) du bord arrière d'une carte à puce, ce qui provoque l'ouverture de l'interrupteur de fin de course (18), le contact de commutation avant (21) étant réalisé de manière que lorsque la carte atteint la position de lecture, il s'applique par un segment plan (43) sur la face supérieure de la carte.

12. Lecteur de cartes à puce selon une ou plusieurs des revendications précédentes, caractérisé en ce que les contacts de commutation comportent un bras relativement long, formé par une partie plane (40), d'où s'étend une partie coudée (42) formant un segment plan (43) et un segment incliné (44).

13. Lecteur de cartes à puce selon une ou plusieurs des revendications précédentes, caractérisé en ce que les contacts de lecture (17), réalisés comme des ressorts de contact, sont mis en place, depuis la face inférieure du porte-contacts, dans des chambres de contact et sont encliquetés dans ces chambres de manière qu'ils soient précontraints à l'état monté.

14. Lecteur de cartes à puce selon une ou plusieurs des revendications précédentes, caractérisé en ce que le porte-contacts (2) possède des moyens d'arrêt sous la forme de nervures d'arrêt (56) qui s'écartent élastiquement à la mise en place par enfoncement d'un contact de lecture, permettant ainsi le montage, et reviennent ensuite élastiquement en arrière pour maintenir le contact (17) à sa position de lecture.

15. Lecteur de cartes à puce selon une ou plusieurs des revendications précédentes, caractérisé en ce que des évidements (58) sont prévus pour conférer de l'élasticité aux nervures d'arrêt (56).

16. Lecteur de cartes à puce selon une ou plusieurs des revendications précédentes, caractérisé en ce que la partie de raccordement (36) des contacts de lecture (17) est coudée et que, à proximité du coude, des languettes de retenue (35) sont formées, qui pénètrent dans des évidements correspondants du porte-contacts (2) afin d'empêcher la translation du contact. de lecture dans le sens de sa dimension longitudinale.

17. Lecteur de cartes à puce selon une ou plusieurs des revendications précédentes, caractérisé en ce que le contact de lecture est précontraint par sa position entre des faces d'appui (60, 57 et 61)

18. Lecteur de cartes à puce selon une ou plusieurs des revendications précédentes, caractérisé en ce que le contact de lecture (17) comporte une première partie plane (33) et une seconde partie plane (34) qui sont fléchies l'une par rapport à l'autre pour former entre elles un angle un peu plus petit que 180°, l'agencement étant tel que lorsque le contact de lecture a été mis en place dans la chambre de contact (31) (voir la figure 15), les deux parties planes (33, 34) sont situées essentiellement sur une droite.

19. Lecteur de cartes à puce selon une ou plusieurs des revendications précédentes, caractérisé en ce que le dispositif compensateur de tolérances (28) comporte un bras orienté dans la direction d'insertion (20) de la carte, portant une bosse (30) orientée transversalement à cette direction et réalisé d'un seul tenant avec le porte-contacts (2).
